# EUROPEAN PATENT APPLICATION

(11) **EP 1 164 056 A1**
(43) Date of publication of application: **19.12.2001**
(21) Application number: 01114512.5
(22) Date of filing: 15.06.2001
(51) Int. Cl.: B60R 13/01, B60R 13/08

(54) **Cover panel for a vehicle load surface**

(30) Priority: 16.06.2000 IT TO000587
(71) Applicant: SELMAT AUTOMOTIVE S.R.L., 10090 Cascine Vica - Rivoli (IT)
(72) Inventor: Maccherrone, Michele c/o Selmat Automotive S.r.l., 10090 Cascine Vica, Rivoli (IT)
(74) Representative: Bongiovanni, Simone (IT)

(57) **Abstract**

A cover panel (7) for a load surface (5, 20) of a vehicle (1) has a bottom surface (8) positioned facing the load surface (5, 20), a supporting surface (9) on the opposite side to the bottom surface (8), and at least one supporting member (14) interposed between the bottom surface and the supporting surface (8)(9) and made of self-supporting foam material.

## Description

The present invention relates to a cover panel for a vehicle load surface.

As is known, the body portions defining the load surfaces of vehicles, such as the boot and passenger compartment floors, are normally undulated and covered with one or more panels, each of which comprises a supporting core made of masonite (registered trademark) and covered with a sheet of, for example, needle punched felt or a polymer material commonly known as "imitation leather".

Known panels of the above type have the drawback of defining, in use, an unstable top supporting surface, which, particularly when loaded, tends to deform according to the shape of the underlying body and to eventually assume an unsightly shape impairing the look of the vehicle.

This is mainly due to the materials used and to the fact that, to reduce size and weight and permit removal by the user, known panels are relatively thin, normally less than a centimeter in thickness. Moreover, the masonite from which the core is made is subject to splintering, thus damaging the cover sheet and reducing the working life of the panel, and, being extremely sensitive to damp, must be completely and carefully covered with waterproofing materials to isolate it from the outside, thus increasing the production cost of the panel.

Moreover, known panels are of more or less constant thickness, tend to reproduce the shape of the load surface, and so define a top supporting surface whose shape depends on that of the underlying load surface, so that, when covering load surfaces of complex or angular shapes, it is fairly difficult to obtain flat supporting portions, even using a number of adjacent, possibly joined panels.

It is an object of the present invention to provide a cover panel for a vehicle load surface, designed to provide a straightforward, low-cost solution to the aforementioned drawbacks.

According to the present invention, there is provided a cover panel for a load surface of a vehicle; the panel comprising a bottom surface positioned facing said load surface, a supporting surface on the opposite side to said bottom surface, and at least one supporting member interposed between said bottom surface and said supporting surface; characterized in that said supporting member is made of self-supporting foam material.

A non-limiting embodiment of the invention will be described by way of example with reference to the accompanying drawings, in which:
Figure 1 shows a preferred embodiment of the cover panel for a vehicle load surface according to the present invention and fitted to a respective vehicle;
Figure 2 shows a larger-scale partial section of the Figure 1 panel;
Figures 3 and 4 show the same view as in Figure 2 of two variations of the Figure 2 panel.

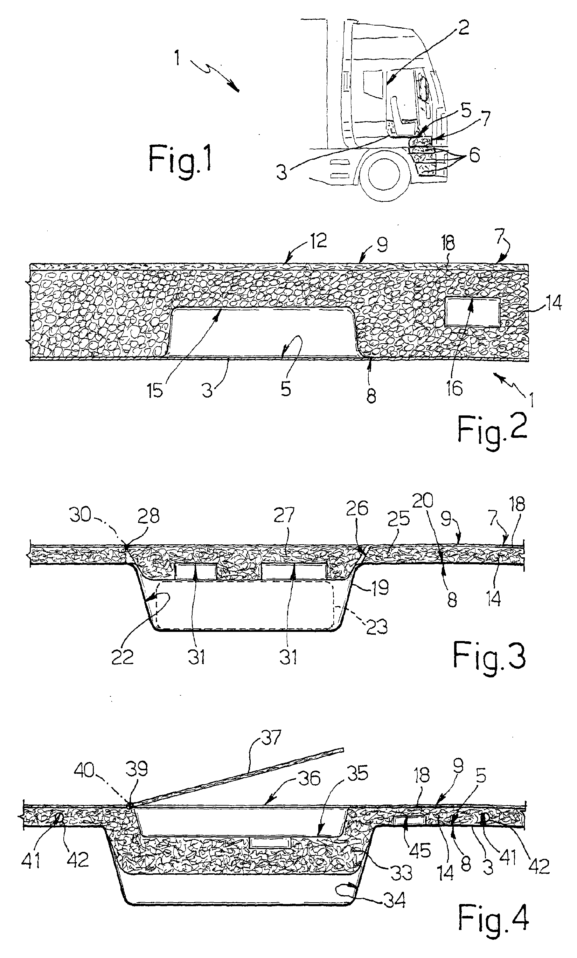

Number 1 in Figure 1 indicates a vehicle (shown partly), in particular an industrial vehicle, comprising a passenger compartment 2 defined at the bottom by a floor 3 (Figure 2), which defines a load surface 5 facing passenger compartment 2 and comprising a number of steps 6 leading into passenger compartment 2.

Here and hereinafter, the term "load surface" is intended to mean any substantially horizontal surface defining in the vehicle a supporting surface for freight or luggage, or a tread surface for the vehicle users, or a support for the vehicle seats.

With reference to Figures 1 and 2, surface 5 is covered with a contoured panel 7, which is defined by a bottom surface 8 facing and resting on surface 5, and by a tread surface 9 which is located on the opposite side to surface 8, defines passenger compartment 2, and comprises a number of flat portions 12 ( only one shown in Figure 2).

Panel 7 comprises a supporting body 14 made of self-supporting foam material, in particular, polypropylene foam or a rigid, self-supporting polyurethane material containing glass fibers. The material comprises a number of spheroidal foam elements, which are conveniently injection molded in the presence of steam and using a mold whose bottom portion or bottom mold is substantially the same shape and size as surface 5 so as to form surface 8 of a shape which is complementary to or a negative of surface 5.

With particular reference to Figure 2, surface 8 defines a weight-reducing cavity 15, which may alternatively house a respective projecting portion (not shown) of floor 3, or may define, together with surface 5, a tray or a passage for cables or pipes (not shown) of vehicle 1.

Cables or pipes can also be routed through an inner through conduit 16 formed through body 14 in a direction substantially parallel to surface 9.

Panel 7 also comprises a sheet 18, which defines surface 9, partly covers body 14, is preferably co-molded with body 14, and is preferably made of cloth or carpeting. Alternatively, sheet 18 may be made of needle punched felt, or polymer material commonly known as "imitation leather", or any other material for enhancing the appearance of surface 9.

Figures 3 and 4 show two variations of panel 7, the component parts of which are indicated, wherever possible, using the same reference numbers as for the corresponding parts in Figures 1 and 2.

With reference to the Figure 3 variation, panel 7 covers a vehicle body wall 19 defining a load surface 20 of a luggage compartment of a vehicle (not shown), and which defines a compartment 22 accessible from the luggage compartment and housing a spare wheel 23 (shown by the dash line).

Panel 7 comprises an intermediate portion 25 defining a passage 26 formed in a direction perpendicular to surface 9 to permit access to compartment 22; and a portion 27 integral with portion 25 and hinged to portion 25 by an elastically deformable portion 28 of sheet 18.

Deformable portion 28 defines a virtual hinge by which to rotate portion 27, with respect to portion 25 and about an axis 30, between a closed position closing passage 26 (Figure 2), and an open position (not shown) enabling access to compartment 22.

Portion 27 projects, on the surface 8 side, with respect to portion 25 to engage compartment 22, and comprises two seats 31 defined by surface 8 and for housing, for example, tools (not shown) housed inside compartment 22 and extending over wheel 23.

With reference to the Figure 4 variation, panel 7 comprises a contoured intermediate portion 33, which projects on the surface 8 side, engages a recess 34 in surface 5, and comprises a tray 35 having an access opening 36 formed on the surface 9 side.

Panel 7 also comprises a lid 37, which is defined by a relatively rigid portion of sheet 18, is integral with portion 33, and is hinged to portion 33 by an elastically deformable portion 39 of sheet 18, defining a virtual hinge, to rotate, with respect to portion 33 and about an axis 40, between a closed position and an open position respectively closing and opening tray 35. In Figure 4, lid 37 is shown in an intermediate position between the open and closed positions.

With reference to Figure 4, panel 7 also comprises two inner through conduits 41 formed through body 14 in directions substantially parallel to surface 9 and engaged by pipes 42, which are co-molded with body 14 and provide, in particular, for conveying fluid, e.g. conditioning air, into passenger compartment 2.

Surface 8 defines a channel 45, which, together with surface 5, defines a passage for cables (not shown) of vehicle 1. In an alternative variation not shown, channel 45 houses a projection (not shown) of floor 3.

As will be clear from the foregoing description, panel 7 can be formed to substantially any shape, by virtue of the self-supporting foam material of which body 14 is made.

In particular, surface 8 can be shaped so that it is complementary to or a "negative" of surface 5, 20, so that panel 7 fits and adheres perfectly to surface 5, 20, can be positioned accurately, and, unlike known solutions, is therefore extremely stable in use, keeps its shape, and does not deteriorate in appearance.

At the same time, supporting or tread surface 9 can be made to any shape regardless of the shape of surface 5, 20, and may preferably be made flat, even in the case of a highly complex surface 5, 20.

The self-supporting foam material from which body 14 is made has extremely good sound-absorbing and soundproofing properties and so provides for reducing the acoustic emissions of the vehicle. Moreover, unlike the materials employed in known solutions, the self-supporting foam material is extremely lightweight, so that panel 7 can be removed easily, keeps its shape and characteristics up to temperatures of about 130°C, is fireproof, waterproof, and resistant to solvents, and therefore to diesel fuel and petrol.

Forming conduits 16, 41 and channel 45 directly in panel 7 also simplifies the routing, passage and fastening of the pipes and cables of vehicle 1.

Moreover, panel 7 is extremely cheap and easy to produce, by being co-molded and made of relatively low-cost materials.

Finally, sheet 18 makes for an extremely attractive surface 9, and provides for forming virtual hinges 28, 39 connecting portion 27 and lid 37, and so forming panel 7 in one piece.

Clearly, changes may be made to panel 7 as described and illustrated herein without, however, departing from the scope of the present invention.

In particular, body 14 may be made of a self-supporting foam material other than those indicated by way of example; may be covered entirely with sheet 18; and/or may comprise a number of superimposed elements.

Panel 7 may comprise a number of blocks hinged to one another by respective virtual hinges, so as to fold panel 7 up relatively compactly, simplify assembly of panel 7 to the vehicle, and even enable the formation of a single contoured panel 7 for covering the whole of surface 5.

Sheet 18, as opposed to being co-molded with body 14, may be preformed and applied subsequently to body 14, particularly in the case of a relatively large panel 7.

Finally, besides covering floor 3, panel 7 may also function as a support or base for the seat portion of a seat of vehicle 1.

## Claims

1. A cover panel (7) for a load surface (5; 20) of a vehicle (1); the panel (7) comprising a bottom surface (8) positioned facing said load surface (5; 20), a supporting surface (9) on the opposite side to said bottom surface (8), and at least one supporting member (14) interposed between said bottom surface and said supporting surface (8) (9); **characterized in that** said supporting member (14) is made of self-supporting foam material.

2. A panel as claimed in Claim 1, **characterized in that** said self-supporting foam material is polypropylene foam.

3. A panel as claimed in Claim 1, **characterized in that** said self-supporting foam material is a rigid polyurethane material.

4. A panel as claimed in any one of the foregoing Claims, **characterized in that** said supporting member comprises glass fibers embedded in said self-supporting foam material.

5. A panel as claimed in any one of the foregoing Claims, **characterized by** comprising a cover member (18) at least partly covering said supporting member (14) and defining at least part of said supporting surface (9).

6. A panel as claimed in Claim 5, **characterized in that** said supporting member and said cover member (14) (18) are co-molded.

7. A panel as claimed in Claim 5 or 6, **characterized by** comprising a first (25; 33) and at least a second (27; 37) portion integral with each other; and hinge means (28; 39) interposed between said first and said second portion (25; 33) (27; 37) to enable one portion to move with respect to the other; said cover member (18) comprising a deformable portion (28; 39) forming part of said hinge means.

8. A panel as claimed in Claim 7, **characterized in that** said first portion (25; 33) defines an opening (26; 36) permitting access to a compartment (22; 35) formed in said panel (7) or in said load surface (5); and **in that** said second portion (27; 37) closes said opening (26; 36).

9. A panel as claimed in Claim 8, **characterized in that** said second portion (37) forms part of said cover member (18).

10. A panel as claimed in any one of the foregoing Claims, **characterized in that** said bottom surface (8) defines at least one seat (15; 45).

11. A panel as claimed in any one of the foregoing Claims, **characterized by** comprising at least one inner conduit (16; 41).

12. A panel as claimed in Claim 11, **characterized by** comprising at least one tubular body (42) housed in said conduit (41).

13. A panel as claimed in any one of the foregoing Claims, **characterized by** defining a tray (35).

14. A panel as claimed in any one of the foregoing Claims, **characterized by** comprising at least one projecting portion (25; 33) projecting on the side of said bottom surface (8) to engage a compartment (22; 34) in said load surface (5; 20).
